# EUROPEAN PATENT SPECIFICATION

(11) **EP 1 820 685 B1**
(45) Date of publication and mention of the grant of the patent: **17.12.2008**
(21) Application number: 06425088.9
(22) Date of filing: 15.02.2006
(51) Int. Cl.: B60K 37/02

(54) **Control system for automotive information display devices**
Steuerungssystem für Vorrichtungen zum Anzeigen von Informationen für Kraftfahrzeuge
Système de contrôle pour un dispositif d'affichage d'informations pour véhicules automobiles

(43) Date of publication of application: 22.08.2007
(73) Proprietor: Magneti Marelli Sistemi Elettronici S.p.A., 20011 Corbetta (Milano) (IT)
(72) Inventor: Mortara, Piero, c/o Magneti Marelli Sistemi Elettronici S.p.A., 10078 Venaria Reale (IT); De La Pierre, Piero, c/o Magneti Marelli Sistemi Elettronici S.p.A., 10078 Venaria Reale (IT)
(74) Representative: Cerbaro, Elena

(56) References cited:
- EP-A- 0 562 332
- US-A- 5 975 728
- US-A1- 2004 212 579
- US-B1- 6 441 726
- US-B1- 6 575 607
- SLAVNICH D: "DELPHI LIGHTS UP THE MUSTANG" AUTOMOTIVE ENGINEER, PROFESSIONAL ENGINEERING PUBLISHING, LONDON, GB, vol. 29, no. 3, March 2004 (2004-03), page 56, XP001192633 ISSN: 0307-6490
- PATENT ABSTRACTS OF JAPAN vol. 2003, no. 02, 5 February 2003 (2003-02-05) & JP 2002 319497 A (TOYODA GOSEI CO LTD), 31 October 2002 (2002-10-31)

## Description

This invention concerns a control system for automotive information display devices.

As is known, modern motor vehicles are equipped with a set of information display devices that include, in general, an analogue or digital instrument panel on which various quantities are displayed such as, for example, the motor vehicle's speed, engine speed, fuel level, etc., a number of optical indicators regarding the state of the motor vehicle indicating, for example, lights on, engine oil level, water coolant temperature, etc., and additional onboard display devices such as, for example, car radio, air-conditioner, navigator, etc.

Most of the analogue instruments comprise, for each quantity represented, a mechanical-type indicator needle representing the value of that quantity on an suitable graduated scale, generally consisting of a series of numeric characters of dimensions and style established during the instrument design phase, while the optical indicators generally comprise standard backlit graphical symbols, each indicating a respective state condition of the motor vehicle.

Instead, most of the digital instruments comprise, for each quantity represented, an indicator composed of an LCD (Liquid Cristal Display) or a number of light emitting elements ("LED") that can be selectively illuminated to form a numeric character indicating the value of that quantity in an associated unit of measurement, or sequentially illuminated to form a level indicator for that quantity on a graduated scale similar to that of an analogue instrument.

The dimensions of the instrument characters and the style in which they are depicted, as well as the size of the graphical symbols on the optical indicators, the colour of the characters and graphical symbols, and their contrast with the instrument's background colour, are defined by the motor-vehicle manufacturer during the design phase of the motor vehicle, without taking various factors into account, including the aesthetic tastes and different visual capabilities of drivers, as well as the different lighting conditions inside and outside of the motor-vehicle that can arise; factors that often do not permit optimal vision and a pleasing visual perception of instrument readings.

US 5 975 728 discloses a method and apparatus for providing user selectable multi-color illumination to automotive instrument panel instruments. In one embodiment, an instrument panel or individual instrument is supplied with a plurality of differently colored illumination sources. The intensity of each color is individually controllable, allowing the user to select both intensity and hue of instrument illumination. In one embodiment, an instrument panel illumination system comprises three light sources that produce nominally white light and three associated diffusing filters, one red, one green, one blue. In another embodiment different colors of illumination are provided by light sources producing different colors of light, such as, for example, a plurality of high intensity red, green, and blue light emitting diodes ("LED's"). In one embodiment, a plurality of triplets of red, green and blue high intensity LED's are mounted above a white diffusing filter. In one embodiment, a plurality of colored light sources are mounted in an instrument housing behind the instrument's bezel.

The object of this invention is that of embodying a control system for a vehicle's information display devices that is able to overcome, at least in part, the limitations of known display devices.

According to this invention, a control system for a vehicle's information display devices is embodied, as defined in claim 1.

For a better understanding of this invention, a preferred embodiment will now be described, purely by way of a non-limitative example, with reference to the enclosed figure, in which a control system for automotive information display devices, in accordance with the invention, is illustrated.

In the figure, reference 1 generally designates a control system for a vehicle's information display devices 2, in particular a motor vehicle, for example a road-going motor vehicle (not shown in the figure), which can, for example, comprise the motor-vehicle's instrument panel and the displays of the car radio, navigator and air-conditioner, or any other device onboard the motor-vehicle, configured to allow personalization of the illumination colours of the display devices 2.

In particular, the invention's control system 1 is conceived for integration with the motor vehicle's onboard communications network so that it is able to communicate with the motor vehicle's electronic devices via the above-stated network, to receive information from sensors or gauges for example, or to control the illumination colours of the display devices 2 via the above-stated onboard communications network.

To this end, the display devices 2 must be configured to communicate with the control system 1 via the motor vehicle's onboard communications network and to allow chromatic variation of the respective colours, via RGB LED for example, based on commands sent from the control system 1.

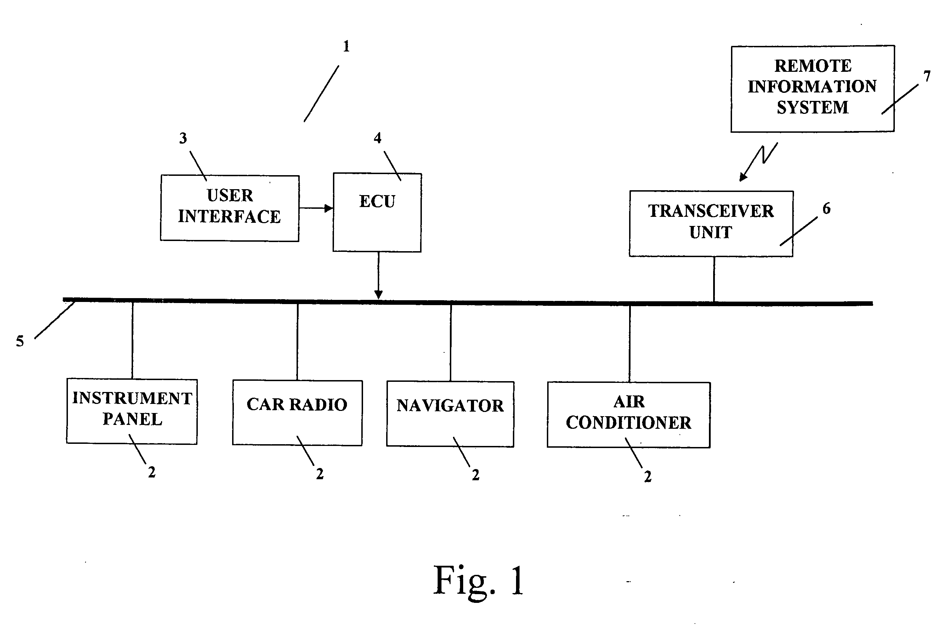

As illustrated in Figure 1, the invention's control system 1 comprises:
- a user interface 3, for controlling the personalization of the illumination colours of the display devices 2, and
- an electronic processing unit 4 connected to the user interface 3 and connected via a communication bus 5, that with which the motor vehicle is equipped for example, with a number of sensors (not shown in the figure) on the motor-vehicle, with the transceiver control unit 6 communicating with a remote information system 7 and with the display devices 2, and configured to control the setting and adjustment of the illumination colours of the display devices 2.

In particular, the user interface 3 is configured to allow the vehicle user, by means of a window-based menu or voice-control or manually via a keyboard, to:
- select and set one of the various illumination colour personalization modes for the display devices 2,
- select the display devices 2 on which it is wished to make a change to the illumination colour,
- modify, create and save new illumination colours,
- modify, create and save colour tables and tables that associate illumination colours of the display devices 2 and/or threshold values for motor, environmental or vehicle-safety related quantities with the display devices 2, and
- set threshold values for motor, environmental or vehicle-safety related quantities,
as described in detail in the following.

In particular, the electronic processing unit 4 is configured to receive input signals from the user interface 3, the motor-vehicle's sensors (for example, sensors able to detect environmental quantities, such as, for example, external temperature, temperature inside the vehicle's driver and passenger compartment/cabin, external luminosity, etc.), motor quantities (such as, for example, vehicle speed, engine speed, engine oil temperature and level, fuel level and coolant liquid temperature), or vehicle-safety related quantities (such as, for example, its level of grip on the road surface, the level of stability, the distance between a following or preceding vehicle or distance from an obstacle, etc.), a navigator (for example, a satellite type) and/or a remote information system, holding information regarding the type of route that the vehicle is travelling along (for example, urban, motorway or mountain), to generate command signals in output able to modify and/or adjust the illumination colours of the display devices 2 on the basis of said input signals and to implement a number of illumination colour personalization modes for the display devices 2 as described in the following.

In particular, the electronic processing unit 4 is configured to implement a number of "static" or "dynamic" illumination colour personalization modes for the display devices.

The "static" personalization modes only provide for the manual or automatic setting of the illumination colours of the devices 2, but not changes to the illumination colours during the operational phases of the devices 2. In the case where a static personalization mode is selected the illumination colours of the display devices 2 will therefore be kept unchanged until a new personalization mode is selected.

Instead, the "dynamic" personalization modes provide for either manual or automatic setting as well as the control and modification of the set illumination colours during the operational phases of the devices 2, in function of, for example, the values of sensor readings for quantities, the relation between detected values and stored threshold values for motor, environmental and vehicle-safety related quantities, as well as in function of information originating from the remote information system and/or the onboard navigation system and the running conditions of the vehicle and/or the vehicle's engine.

In particular, the "dynamic" personalization modes can provide for both an abrupt change in the illumination colour of each illumination device (for example, the passage from green to red when a certain threshold level is exceeded) and a gradual change in the chromatic tone of the illumination colour of the devices 2 (for example, the passage from dark green to light green, yellow, orange and then red, or vice versa) when the quantities detected by the sensors approach or move away from the preset threshold values.

According to the invention, at least one colour palette is stored in the electronic processing unit 4, for example, 4096 colours encoded according to a digital standard of known type, for example, the RGB standard in which each colour is created by combining the three fundamental colours of red, green and blue, each of which is encoded according to a predefined bit sequence, for example, of 4, 8, 16 or 32 bits etc.

The colour palette stored in the electronic processing unit 4 can be defined, for example, on the basis of specific requirements of the motor vehicle manufacturer than can depend, for example, on the type and class of vehicle.

In the case where the control system 1 is implemented, for example, in a medium-low category motor vehicle, a palette of only 4096 colours might be stored in the electronic processing unit in order to contain costs, whereas in the case of implementing the system 1 in a vehicle belonging to a higher category it might be possible, for example, to store a palette of 16,777,216 colours, corresponding to all possible combinations of the three fundamental colours in the case where each of them is encoded with a sequence of 8 bits. It is quite clear how in the second case, having a much greater resolution available and consequently a much larger number of colours, the user also has a much larger number of possibilities for personalizing the illumination colours of the display devices 2 according to his/her aesthetic tastes.

In addition to the colour palette, the following are also stored in the electronic processing unit 4:
- at least one table TAB_{COL} of illumination colours chosen from all the possible colour combinations of the colour palette stored in the electronic processing unit 4, for example, 100 or 200 colours chosen from 4096 or 16.777.216 colours, including, for example, 10 shades of yellow, 10 shades of red, etc.,
- at least one table TAB_{COL_DEV} in which each display device 2 has at least one of its illumination colours associated with it, for example, a shade of green for the needles of the speedometer and the rev counter, a shade of yellow for the car radio's front panel and a shade of blue for the air-conditioner's display, and
- at least one table TAB_{CHANGE_COL} containing an illumination colour associated with each display device, as defined in table TAB_{COL_DEV} for example, for threshold values of motor quantities in function of the running conditions of the vehicle and/or the vehicle's engine, of environmental quantities or vehicle-safety related quantities, as well as information related to the automatic modification of the illumination colour of each display device 2 when a certain event occurs, for example, a sudden or gradual change in the illumination colour when the above-mentioned threshold values are exceeded.

For example, information regarding the following display devices 2 could be stored in table TAB_{CHANGE_COL}:
- speed indicator: illumination colour when the vehicle is stationary or has not yet exceeded any threshold value regarding possible speed limits: green, blue or any other neutral colour that can be instinctively associated with a normal situation - illumination colour whenever the vehicle exceeds a threshold value set by the user or exceeds a threshold value associated with a speed limit deducible from information provided by the navigation system (for example, if the vehicle travels along a road in an urban area and exceeds the 50 km/h speed limit): red or flashing red - or a gradual passage from green to orange and then red as the speed of the vehicle increases and approaches the preset threshold value or a gradual passage from red to orange and then green as the speed decreases and moves away from the preset threshold value,
- rev indicator with vehicle stationary: a gradual passage of the illumination colour from green to orange and then red as the number of revs increases and approaches the given threshold value (2000 rpm for example), or a gradual passage from red to orange and then green as the number of revs drops and moves away from the threshold value,
- rev indicator with vehicle in movement: a gradual passage of the illumination colour from green to orange and then red as the number of revs increases and approaches the given threshold value (6000 rpm for example), or a gradual passage from red to orange and then green as the number of revs drops and moves away from the threshold value,
- fuel and oil level indicators: illumination colour in the case where tanks are at least half full: green, blue or any other neutral colour that can be instinctively associated with a normal situation - colour assumed in the case where the fuel or oil level is below half of the maximum capacity of the respective tanks: orange - illumination colour if the fuel and/or oil level is at or below the minimum level: red,
- air-conditioner: illumination colour in the case where the external temperature is between -5°C and 5°C: blue - illumination colour in the case where the external temperature is between 5°C and 10°C: light-blue - illumination colour in the case where the external temperature is between 10°C and 20°C: yellow - illumination colour if the temperature is between 20°C and 30°C: orange - etc. - or a gradual passage from blue to light-blue and then yellow as the external temperature increases or a gradual passage from yellow to light-blue and then blue as the temperature increases,
- satellite navigator: illumination colour if the vehicle is on a mountain road with many bends: red - illumination colour in the case where the vehicle is on level road: green - etc., and
- automatic cruise control, distance indicator of car in front and/or of an obstacle: illumination colour in the case where the vehicle maintains a predefined safety distance from other vehicles or possible obstacles: green - illumination colour in the case where the vehicle is just below a predefined minimum safety distance from other vehicles or possible obstacles: orange - illumination colour in the case where the vehicle is abundantly below a predefined minimum safety distance: red or flashing red - or a gradual passage from green to orange and then red, or vice versa, in function of the shortening or increasing of the preset safety distance.

The TAB_{COL}, TAB_{COL_DEV} and TAB_{CHANGE_COL} tables can, for example, be defined in a configuration phase of the system 1 and, in particular, the TAB_{COL} and TAB_{COL_DEV} tables can be defined according to the vehicle's aesthetic characteristics, such as the interior colours of the driver and passenger compartment/cabin specified by the vehicle manufacturer for example, while the TAB_{CHANGE_COL} table can be defined according to the driver's visual capabilities and/or in such a way that the change in the illumination colour of the display devices 2 signals the occurrence of an event associated with a abnormal situation to the driver in the best possible way.

In particular, the electronic processing unit 4 is configured to implement a configuration mode for illumination colour personalization CONFIG, in which the user can manually configure the control system 1, or rather create new colours and modify the TAB_{COL}, TAB_{COL_DEV} and TAB_{CHANGE_COL} tables, for example, according to his/her aesthetic taste, or based on his/her visual capabilities or on the external or internal luminosity of the vehicle, and an illumination colour personalization mode FUNCTION that allows the user to select one of the various modes of setting and changing the illumination colours of the display devices 2.

In particular, the CONFIG configuration mode provides:
- a COLOR mode in which the user can:
   - create one or more new colours by combining the three fundamental colours red, green and blue.

In particular, in the COLOR mode, the user can select a given value for each of the fundamental colours red, green and blue, choosing them from a set of values determined by the number of bits with which each fundamental colour is encoded, for example, 16 different red, green and blue values in the case where they are each encoded with 4 bits, or 256 different red, green and blue values in the case where they are encoded with 8 bits, and so obtain a new colour,
- save one or more new colours in the TAB_{COL} colour table, and
- delete and/or modify the colours in the TAB_{COL} colour table,
   - a TAB mode, in which the user can modify the TAB_{COL_DEV} and TAB_{CHANGE_COL} tables, for example, by selecting the display devices 2, one at a time, on which it is wished to make a change to the illumination colours of the display devices 2 themselves and by changing the colour that it is wished to assign to each display device, as well as the colour that it is wished for each display device 2 to assume when a given event occurs, and also by defining new threshold values for motor, environmental and vehicle-safety related quantities, or the type information originating from the navigation system and/or remote information system, based on which a change in the illumination colour of the display devices 2 is planned - or create and save new TAB_{COL_DEV} and TAB_{CHANGE_COL} tables without modifying the TAB_{COL_DEV} and TAB_{CHANGE_COL} tables defined by the motor vehicle's manufacturer and stored in the electronic processing unit 4.

In particular, to modify and/or create new TAB_{COL_DEV} and TAB_{CHANGE_COL} tables, in TAB mode the user must choose between the available colours in the TAB_{COL} table and, in the case where none of the available colours are to his/her liking, create a new colour to store in the TAB_{COL} table using the COLOR mode.

For example, in TAB mode the user can create a new TAB_{COL_DEV} table and select a single illumination colour to use simultaneously on all of the display devices (2).

In particular, the FUNCTION personalization mode comprises:
- a MAN/TAB mode, in which the user can select one of the available TAB_{COL_DEV} and/or TAB_{CHANGE_COL} tables; selecting one of the available TAB_{COL_DEV} tables, each display device 2 will automatically assume the illumination colour assigned to it in the TAB_{COL_DEV} table and maintain this illumination colour until another table is selected or another of the FUNCTION modes, whilst in the case where the user wishes that the display devices 2 automatically change the illumination colour when a certain event occurs, he/she must select one of the available TAB_{CHANGE_COL} tables,
- an AUTO/TAB_{COL_DEV} mode, in which the electronic processing unit 4 automatically selects one of the available TAB_{COL_DEV} tables, based on, for example, the values of environmental, and safety quantities detected by the sensors when the vehicle is switched on, and automatically sets the display colours stored in the selected TAB_{COL_DEV} table,
- an AUTO/TAB_{CHANGE_COL} mode, in which the electronic processing unit 4 automatically selects one of the available TAB_{CHANGE_COL} tables, based on, for example, the values of environmental, and safety quantities detected by the sensors when the vehicle is switched on, sets and automatically modifies the illumination colours as defined in the selected TAB_{CHANGE_COL} table, and
- an AUTO/LUM, mode, in which the electronic processing unit 4 automatically selects one of the available TAB_{COL_DEV} tables, based on, for example, the values of environmental, motor and safety quantities detected by the sensors when the vehicle is switched on, automatically sets the illumination colours stored in the selected TAB_{COL_DEV} table and modifies the illumination colours exclusively on the basis of the external and/or internal luminosity of the vehicle, in order to always guarantee optimum visibility of the information displayed on the display devices 2.

Furthermore, according to the invention, the electronic processing unit 4 is configured to continually compare the quantity threshold values set by the user and stored in the tables with threshold values deduced from information originating from the onboard navigation system and/or remote information system and to always select the threshold value set by the user.

For example, when the vehicle enters an urban area, the onboard navigation system signals this event to the electronic processing unit 4, to which the electronic processing unit 4 automatically associates the threshold value for the maximum speed allowed, i.e. 50 km/h. Based on this information, the electronic processing unit 4 determines if a threshold value related to a maximum speed limit in urban centres has been set and, in the case where this threshold value is present, for example 40 km/h, it changes the illumination colour of the speed indicator in function of this threshold value, namely 40 km/h. Instead, if the electronic processing unit 4 does not find any threshold value set, then the electronic processing unit 4 modifies the illumination colour of the speed indicator in function of the threshold value deduced from the information originating from the navigation system, namely the 50 km/h limit allowed by law.

The electronic processing unit 4 is also configured to automatically modify threshold values for motor quantities based on the running conditions of the vehicle and/or the vehicle's engine. For example, the electronic processing unit 4 could be configured to modify the threshold value related to the engine speed at which change in the rev indicator's illumination colour takes place, based upon engine temperature. For example, this threshold value can automatically increase in a gradual manner from a minimum value associated with the engine temperature when the engine is switched on, 2000 rpm for example, up until a maximum threshold value is reached, 6000 rpm for example, associated with an engine temperature under normal running conditions.

It is clear that when the vehicle is switched off, the electronic processing unit 4 will keep the last operative illumination colour personalization mode of the display devices 2 in memory, which will automatically be restarted by the electronic processing unit 4 when the motor vehicle is switched on again.

In particular, to set or modify the illumination colours of one or more display devices 2, for example, when the user selects one of the FUNCTION modes or when a quantity detected by the sensors exceeds a threshold value, the electronic processing unit 4 is configured to generate and send, via the data bus 5, various types of messages containing information regarding the illumination colour that should be used to the display devices affected by the colour change, these display devices in turn being configured to process these messages and extract the pertinent information from them.

In particular, the electronic processing unit 4 is configured to generate and send the following encoded messages to the display devices 2:
- a single broadcast-type message containing only information regarding the colour setting to send to all the display devices 2, in the case where all the display devices 2 must assume the same colour. In this case, the message is simultaneously received and processed by all of the display devices 2, which then take steps to set the new colour,
- a single broadcast-type message containing the address of each display device 2 for which it is wished to set or modify the illumination colour and information regarding the setting of the illumination colour associated with the address of the above-stated display device. In this case, the message is received and processed by all of the display devices 2, but the setting or modification of the illumination colours will only be carried out by those devices whose address is contained in the message,
- a sequence of individual messages, one for each display device 2 for which it is wished to set or modify the colour, each containing the address of the display device 2 and information regarding the setting of the colour. In this case, therefore, each display device 2 receives and processes the message that is addressed to it.

The advantages of the invention's control system are the following:
- a considerable improvement in the level of visibility of the information displayed on the display devices present onboard a motor vehicle, thanks to the continual adjustment of the colours according to the external and internal luminosity of the vehicle,
- optimization of the functionality of the display devices thanks to the increase in the quantity of information provided by the display devices that, in addition to information on the quantities that they display, also provide additional information regarding the crossing of predetermined values, and
- aesthetic personalization of the display devices that, thanks to the invention's system, can be configured at the discretion of the driver or the passengers of the motor vehicle, according to their aesthetic tastes, thereby making the visual perception of the readings they provide more pleasing.

In addition, the invention's control system can be embodied by utilizing at least in part the communication systems that the motor vehicle has at its disposal, for example, the onboard communications network of a modern vehicle.

Finally, it is obvious that modifications and variants can be made to the control system described and illustrated herein without however leaving the protective scope of this invention, as defined in the enclosed claims.

The invention's control system can, for example, be configured to communicate with other electronic devices equipped with memory, for example, smart cards, electronic ignition keys, etc., on which at least a TAB_{COL_DEV} and/or TAB_{CHANGE_COL} table is stored and which is automatically transmitted, each time the vehicle is started for example, by the above-stated electronic devices to the control system, which takes care of automatically setting and modifying the display colours of the display devices according to the data stored in the TAB_{COL_DEV} and/or TAB_{CHANGE_COL} tables.

The system 1 can be embodied using the network architecture that the vehicle already has at its disposal, for example, of the CAN, LIN, TTP, FLEXRAY type etc., which connects all of the onboard electronic devices and is suitable for implementing data transmission between onboard electronic devices.

## Claims

1. Control system (1) for at least one display device (2) for vehicle information, said display device (2) being of a type that can be modified regarding at least one illumination colour, said control system comprising a user interface (3) to allow a user to interact with said display device (2), and electronic control means (4) connected to said display device (2), to said user interface (3) and to sensor means for at least one environmental and/or motor and/or driving-safety quantity of said vehicle, and for controlling said illumination colour in response to the actions of the user on said user interface (3), said electronic control means (4) are configured for implementing a first personalization mode of said illumination colours, which can be selected by the user via said user interface (3), in which said illumination colours are created by the user based on a range of fundamental colours (R,G,B); **characterized in that**
said electronic control means (4) are configured to store at least a first (TAB_{COL}), a second (TAB_{COL_DEV}) and a third (TAB_{CHANGE_COL}) predefined table,
• said first table (TAB_{COL}) comprising representative data of at least one range of predefined illumination colours,
• said second table (TAB_{COL_DEV}) comprising representative data of said display device (2) and representative data of at least one illumination colour that is associated with it, and
• said third table (TAB_{CHANGE_COL}) comprising:
- representative data of said display device (2),
- at least a first illumination colour associated with said display device (2) and a first operational mode of said display device (2),
- at least a second illumination colour associated with said display device (2) and a second operational mode of said display device (2),
- a number of first threshold values for said environmental and/or motor and/or driving-safety quantities of said vehicle,
- said first/second operational modes being actionable on the basis of the value of said motor quantities in function of the running conditions of said vehicle and/or the engine of said vehicle, of said environmental quantities or of said vehicle-safety related quantities, with respect to said threshold values;
said electronic control means (4) are also configured to implement a second personalization mode that can be selected by a user via said user interface means (3), in said second mode (MAN/TAB) the user being able to select one of said second (TAB_{COL_DEV}) and third (TAB_{CHANGE_COL}) tables via said user interface means (3) and the said illumination colour of said display device (2) being set and automatically controlled on the basis of the data contained in the said selected table;
in which said electronic control means (4) are configured to compare said first threshold values of said motor, environmental and vehicle-safety related quantities, stored in said third table (TAB_{CHANGE_COL}) or set by said user, when said second personalization mode is implemented, with the second threshold values of said motor, environmental and vehicle-safety related quantities, originating from remote information sources.

2. Control system according to claim 1, in which said electronic control means (4) are also configured to implement a configuration mode (CONFIG) that can be selected by a user via said user interface means (3), it being possible for the user to manually modify at least part of the data contained in said first (TAB_{COL}), second (TAB_{COL_DEV}) and third (TAB_{CHANGE_COL}) tables in said configuration mode (CONFIG) via said user interface (3).

3. Control system for a number of display devices (2) according to claim 1 or 2, in which said electronic control means (4) are also configured to implement a third personalization mode (TAB) that can be selected by a user via said user interface means (3), in said third personalization mode said user being able to:
• select, via said user interface (3), at least one display device (2) for which it is wished set or modify the relative illumination colour,
• select an illumination colour,
• associate the selected illumination colour with the selected device.

4. Control system according to claim 1, in which said electronic control means (4) are configured to select one of the said first threshold values for said quantities set by the user and said second threshold values provided by said remote information sources on the basis of said comparison and logic that guarantees the observance of at least one predefined priority.

5. Control system according to claim 4, in which said electronic control means (4) are configured to only select one of said first threshold values of said quantities set by the user.

6. Control system according to claim 5, in which said electronic control means (4) are configured to modify at least one of said threshold values based on the instantaneous running conditions of said vehicle and/or the engine of said vehicle.

7. Control system according to claim 1, in which said electronic control means (4) are also configured to implement a fourth personalization mode (AUTO/TAB_{COL_DEV}) that the user can select via said user interface means (3), in said fourth mode (AUTO/TAB_{COL_DEV}) said electronic control means (4) being configured to automatically select one of a number of available second tables (TAB_{COL_DEV}) for setting said illumination colour of said display device based on the data contained in said automatically selected second table (TAB_{COL_DEV}).

8. Control system according to claim 6, in which said electronic control means (4) are also configured to implement a fifth personalization mode (AUTO/TAB_{CHANGE_COL}) that the user can select via said user interface means (3), in said fifth mode (AUTO/TAB_{CHANGE_COL}) said electronic control means (4) being configured to automatically select one of a number of available third tables (TAB_{CHANGE_COL}) and to set and modify said illumination colour of said display device (2) on the basis of said automatically selected third table (TAB_{COL_DEV}).

9. Control system according to claim 2, in which said electronic control means (4) are also configured to implement a sixth personalization mode (AUTO/LUM) that the user can select via said user interface means (3), in said sixth mode (AUTO/LUM) said electronic control means (4) being configured to automatically select one of a number of available said second tables (TAB_{CHANGE_COL}), to set said illumination colour of said display device (2) on the basis of said selected second table (TAB_{COL_DEV}) and to modify said illumination colour of said display device (2) exclusively on the basis of the external and/or internal luminosity of said vehicle.

10. Control system according to any of the previous claims, in which said electronic control means (4) are also configured to control a progressive chromatic variation of said illumination colours of said display devices (2) based on a value assumed by said motor quantities in function of the running conditions of said vehicle and/or the engine of said vehicle, of said environmental quantities or of said vehicle-safety related quantities, with respect to said threshold values of said quantities.

11. Control system according to any of the previous claims in which said user interface (3) includes at least one of the following: smart card, electronic ignition key of said vehicle equipped with memory, window-based menu, voice-controlled electronic device, and keyboard.

12. Control system (1) according to any of the previous claims, in which said environmental quantities include at least one of the following: external temperature, internal temperature of the driver and passenger compartment/cabin of said vehicle, and external luminosity.

13. Control system (1) according to any of the previous claims, in which said motor quantities include at least one of the following:
• road speed of said vehicle,
• engine speed of said vehicle,
• lubricant oil temperature of said engine,
• fuel level, and
• coolant liquid temperature of said engine.

14. Control system (1) according to any of the previous claims, in which said quantities related to the safety of said vehicle include at least one of the following:
• grip of said vehicle on the road surface,
• level of stability of said vehicle,
• distance from a vehicle and/or an obstacle that follows and/or precedes said vehicle.

15. Control system according to any of the previous claims, in which said information display device (2) include at least one of the following:
• instrument panel of said vehicle,
• display of a car radio,
• display of a navigator,
• display of an air-conditioner.

16. Control system (1) for a number of display devices according to any of the previous claims, in which said electronic control means (4) are configured to generate and send a first single broadcast-type encoded message to all of said display devices (2), in the case where all of said display devices (2) must assume the same illumination colour, said first broadcast-type encoded message only containing information regarding the setting of said illumination colour.

17. Control system (1) for a number of display devices according to any of the previous claims in which said electronic control means (4) are configured to generate and send a second single broadcast-type message to the display devices (2) for which it is wished to change the said illumination colour, said second broadcast-type encoded message containing information regarding the address of each of said display devices for which it is wished to change the said illumination colour and information regarding the setting of the illumination colour (2) of each of said display devices for which it is wished to change the said illumination colour.

18. Control system (1) for a number of display devices according to any of the previous claims in which said electronic control means (4) are configured to generate and send a single message to a display device (2) for which it is wished to change an illumination colour, said single message containing information regarding the address of said display device for which it is wished to change the said display colour and information regarding the setting of the illumination colour (2) of said display device.

19. Vehicle, **characterized in that** it includes a control system (1) according to any of the claims 1 to 18.

20. Vehicle according to claim 19, **characterized in that** it is a motor vehicle.

## Patentansprüche

1. Steuersystem (1) für mindestens eine Anzeigevorrichtung (2) für Fahrzeuginformationen, wobei die Anzeigevorrichtung (2) von einem Typ ist, welcher hinsichtlich mindestens einer Beleuchtungsfarbe veränderbar ist, wobei das Steuersystem ein Benutzerinterface (3), das es einem Benutzer ermöglicht, mit der Anzeigevorrichtung (2) zu interagieren, und elektronische Steuereinrichtungen (4) aufweist, welche mit der Anzeigevorrichtung (2), mit dem Benutzerinterface (3) und mit Sensoreinrichtungen für mindestens einen Umgebungs- und/oder Motor- und/oder Fahrsicherheitswert des Fahrzeugs, und zum Steuern der Beleuchtungsfarbe in Reaktion auf die Aktionen des Benutzers an dem Benutzerinterface (3) verbunden sind, wobei die elektronischen Steuereinrichtungen (4) zum Implementieren eines ersten Beleuchtungsfarben-Personalisierungsmodus ausgebildet sind, welcher von dem Benutzer über das Benutzerinterface (3) wählbar ist und in welchem die Beleuchtungsfarben von dem Benutzer auf der Basis eines Bereichs von Grundfarben (R, G, B) erzeugt werden,
**dadurch gekennzeichnet, dass**
die elektronischen Steuereinrichtungen (4) derart ausgebildet sind, dass sie wenigstens eine erste (TAB_{COL}), eine zweite (TAB_{COL-DEV}) und eine dritte (TAB_{CHANGE_COL}) vordefinierte Tabelle speichern,
- wobei die erste Tabelle (TAB_{COL}) repräsentative Daten mindestens eines Bereichs vordefinierter Beleuchtungsfarben aufweist,
- wobei die zweite Tabelle (TAB_{COL_DEV}) repräsentative Daten der Anzeigevorrichtung (2) und repräsentative Daten der mindestens einen Beleuchtungsfarbe, weiche dieser zugeordnet ist, aufweist, und
- wobei die dritte Tabelle (TAB_{CHANGE_COL}) enthält:
- repräsentative Daten der Anzeigevorrichtung (2),
- mindestens eine erste Beleuchtungsfarbe, welche der Anzeigevorrichtung (2) und einem ersten Betriebsmodus der Anzeigevorrichtung (2) zugeordnet ist,
- mindestens eine zweite Beleuchtungsfarbe, weiche der Anzeigevorrichtung (2) und einem zweiten Betriebsmodus der Anzeigevorrichtung (2) zugeordnet ist,
- eine Anzahl erster Schwellenwerte für die Umgebungs- und/oder Motor- und/oder Fahrsicherheits-Werte des Fahrzeugs,
- wobei der erste/zweite Betriebsmodus auf der Basis des Betrags der Motorwerte in Abhängigkeit von den Betriebszuständen des Fahrzeugs und/oder des Motors des Fahrzeugs, der Umgebungswerte oder der die Fahrzeugsicherheit betreffenden Werte in bezug auf die Schwellenwerte aktivierbar sind;
- wobei die elektronischen Steuereinrichtungen (4) ferner derart ausgebildet sind, dass sie einen zweiten Personalisierungsmodus implementieren, der von dem Benutzer über die Benutzerinterfaceeinrichtung (3) wählbar ist, wobei der Benutzer in dem zweiten Modus (MAN/TAB) in der Lage ist, über die Benutzerinterfaceeinrichtung (3) die zweite (TAB-_{COL_DEV}) oder die dritte Tabelle (TAB_{CHANGE_COL}) zu wählen, und wobei die Beleuchtungsfarbe der Anzeigevorrichtung (2) auf der Basis der in der der gewählten Tabelle enthaltenen Daten eingestellt und automatisch gesteuert wird;
- wobei die elektronischen Steuereinrichtungen (4) derart ausgebildet sind, dass sie die ersten Schwellenwerte des Motors, der die Umgebung und die Fahrzeugsicherheit betreffenden Werte, welche in der dritten Tabelle (TAB_{CHANGE_COL}) gespeichert oder von dem Benutzer eingestellt sind, bei implementiertem zweitem Personalisierungsmodus mit den von entfernten Informationsquellen stammenden zweiten Schwellenwerten der den Motor, die Umgebung und die Fahrzeugsicherheit betreffenden Werten vergleichen.

2. Steuersystem nach Anspruch 1, bei welchem die elektronischen Steuereinrichtungen (4) ferner derart ausgebildet sind, dass sie einen Konfigurationsmodus (CONFIG) implementieren, welcher von dem Benutzer über die Benutzerinterfaceeinrichtung (3) wählbar ist, wobei es dem Benutzer möglich ist, mindestens einen Teil der in der ersten (TAB_{COL}), zweiten (TAB_{COL_DEV}) und dritten (TAB_{CHANGE_COL}) Tabelle enthaltenen Daten im Konfigurationsmodus (CONFIG) über das Benutzerinterface (3) manuell zu ändern.

3. Steuersystem für eine Anzahl von Anzeigevorrichtungen (2) nach Anspruch 1 oder 2, bei welcher die elektronischen Steuereinrichtungen (4) ferner derart ausgebildet sind, dass sie einen dritten Personalisierungsmodus (TAB) implementieren, der von dem Benutzer über die Benutzerinterfaceeinrichtung (3) wählbar ist, wobei der Benutzer in dem dritten Personalisierungsmodus in der Lage ist,
- über das Benutzerinterface (3) mindestens eine Anzeigevorrichtung (2) zu wählen, für welche die jeweilige Beleuchtungsfarbe eingestellt oder verändert werden soll,
- eine Beleuchtungsfarbe zu wählen,
- die gewählte Beleuchtungsfarbe der gewählten Vorrichtung zuzuordnen.

4. Steuersystem nach Anspruch 1, bei welchem die elektronischen Steuereinrichtungen (4) derart ausgebildet sind, dass sie entweder die ersten Schwellenwerte für die von dem Benutzer eingestellten Werte oder die von den entfernten Informationsquellen gelieferten zweiten Schwellenwerte auf der Basis des Vergleichs und einer Logik wählen, welche die Beachtung mindestens einer vordefinierten Priorität gewährleistet.

5. Steuersystem nach Anspruch 4, bei welchen die elektronischen Steuereinrichtungen (4) in der Lage sind, nur einen der ersten Schwellenwerte der von dem Benutzer eingestellten Werte zu wählen.

6. Steuersystem nach Anspruch 5, bei welchem die elektronischen Steuereinrichtungen (4) derart ausgebildet sind, dass sie mindestens einen der Schwellenwerte auf der Basis der momentanen Betriebsbedingungen des Fahrzeugs und/oder des Motors des Fahrzeugs verändern.

7. Steuersystem nach Anspruch 1, bei welchem die elektronischen Steuereinrichtungen (4) ferner derart ausgebildet sind, dass sie einen vierten Personalisierungsmodus (AUTO/TAB_{COL_DEV}) implementieren, welchen der Benutzer über die Benutzerinterfaceeinrichtung (3) wählen kann, wobei in dem vierten Modus (AUTO/TAB_{COL_DEV}) die elektronischen Steuereinrichtungen (4) derart ausgebildet sind, dass sie automatisch eine von mehreren verfügbaren zweiten Tabellen (TAB_{COL_DEV}) wählen, um die Beleuchtungsfarbe der Anzeigevorrichtung auf der Basis der in dieser automatisch gewählten zweiten Tabelle (TAB_{COL_DEV}) einzustellen.

8. Steuersystem nach Anspruch 6, bei welchem die elektronischen Steuereinrichtungen (4) ferner derart ausgebildet sind, dass sie einen fünften Personalisierungsmodus (AUTO/TAB_{CHANGE_COL}) implementieren, welchen der Benutzer über die Benutzerinterfaceeinrichtung (3) wählen kann, wobei in dem fünften Modus (AUTO/TAB_{CHANG_COL}) die elektronischen Steuereinrichtungen (4) derart ausgebildet sind, dass sie automatisch eine von mehreren verfügbaren dritten Tabellen (TAB_{CHANGE_COL}) wählen, um die Beleuchtungsfarbe der Anzeigevorrichtung (2) auf der Basis dieser automatisch gewählten dritten Tabelle (TAB_{CHANGE_COL}) einzustellen und zu ändern.

9. Steuersystem nach Anspruch 2, bei welchem die elektronischen Steuereinrichtungen (4) ferner derart ausgebildet sind, dass sie einen sechsten Personalisierungsmodus (AUTO/LUM) implementieren, weichen der Benutzer über die Benutzerinterfaceeinrichtung (3) wählen kann, wobei in dem sechsten Modus (AUTO/LUM) die elektronischen Steuereinrichtungen (4) derart ausgebildet sind, dass sie automatisch eine von mehreren verfügbaren zweiten Tabellen (TAB_{COL_DEV}) wählen, um die Beleuchtungsfarbe der Anzeigevorrichtung (2) auf der Basis dieser automatisch gewählten zweiten Tabelle (TAB_{COL_DEV}) einzustellen und die Beleuchtungsfarbe der Beleuchtungsvorrichtung (2) ausschließlich auf der Basis der Helligkeit außerhalb und/oder innerhalb des Fahrzeugs zu ändern.

10. Steuersystem nach einem der vorhergehenden Ansprüche, bei welchem die elektronischen Steuereinrichtungen (4) ferner derart ausgebildet sind, dass sie eine progressive chromatische Veränderung der Beleuchtungsfarben der Anzeigevorrichtungen (2) auf der Basis des Betrags der Motorwerte in Abhängigkeit von den Betriebsbedingungen des Fahrzeugs und/oder des Motors des Fahrzeugs, der Umgebungswerte oder der die Fahrzeugsicherheit betreffenden Werte in bezug auf die Schwellenwerte der Werte steuern.

11. Steuersystem nach einem der vorhergehenden Ansprüche, bei welchem das Benutzerinterface (3) wenigstens eines der folgenden Elemente aufweist: eine Smart-Card, eine mit einem Speicher versehenen elektronischen Zündschlüssel des Fahrzeugs, ein Menü auf Fenster-Basis, eine sprachgesteuerte elektronische Vorrichtung, und eine Tastatur.

12. Steuersystem (1) nach einem der vorhergehenden Ansprüche, bei welchem die Umgebungswerte wenigstens einen der folgenden Werte umfassen: die Außentemperatur, die Innentemperatur der Fahrgastzelle/- kabine des Fahrzeugs, und die Außenhelligkeit.

13. Steuersystem (1) nach einem der vorhergehenden Ansprüche, bei welchem die Motorwerte mindestens einen der folgenden Werte umfassen:
- die Fahrgeschwindigkeit des Fahrzeugs,
- die Motordrehzahl des Fahrzeugs,
- die Schmieröltemperatur des Motors,
- den Kraftstoffpegel, und
- die Kühlflüssigkeitstemperatur des Motors.

14. Steuersystem (1) nach einem der vorhergehenden Ansprüche, bei welchem die die Fahrzeugsicherheit betreffenden Werte mindestens einen der folgenden Werte umfassen:
- die Haftung des Fahrzeugs auf der Straßenoberfläche,
- den Stabilitätsgrad des Fahrzeugs,
- den Abstand von einem vor und/oder hinter dem Fahrzeug befindlichen Fahrzeug und/oder Hindernis.

15. Steuersystem nach einem der vorhergehenden Ansprüche, bei welchem die Informationsanzeigevorrichtung (2) mindestens eines der folgenden Elemente umfasst:
- die Instrumententafel des Fahrzeugs,
- die Anzeige eines Autoradios,
- die Anzeige eines Navigationsgerätes,
- die Anzeige einer Klimaanlage.

16. Steuersystem (1) für mehrere Anzeigevorrichtungen nach einem der vorhergehenden Ansprüche, bei welchem die elektronischen Steuereinrichtungen (4) derart ausgebildet sind, dass sie eine erste einzelne codierte Funknachricht an sämtliche Anzeigevorrichtungen (2) erzeugen und senden, wenn sämtliche Anzeigevorrichtungen (2) die gleiche Beleuchtungsfarbe annehmen sollen, wobei die erste einzelne codierte Funknachricht nur Informationen bezüglich der Einstellung dieser Beleuchtungsfarbe enthält.

17. Steuersystem (1) für mehrere Anzeigevorrichtungen nach einem der vorhergehenden Ansprüche, bei welchem die elektronischen Steuereinrichtungen (4) derart ausgebildet sind, dass sie eine zweite einzelne codierte Funknachricht an jene Anzeigevorrichtungen (2) erzeugen und senden, deren Beleuchtungsfarbe verändert werden soll, wobei die zweite einzelne codierte Funknachricht Informationen bezüglich der Adresse jeder der Anzeigevorrichtungen, deren Beleuchtungsfarbe verändert werden soll, und Informationen bezüglich der Einstellung der Beleuchtungsfarbe jeder der Anzeigevorrichtungen (2) enthält, deren Beleuchtungsfarbe verändert werden soll.

18. Steuersystem (1) für mehrere Anzeigevorrichtungen nach einem der vorhergehenden Ansprüche, bei welchem die elektronischen Steuereinrichtungen (4) derart ausgebildet sind, dass sie eine einzelne Nachricht an eine Anzeigevorrichtung (2) erzeugen und senden, deren Beleuchtungsfarbe verändert werden soll, wobei die einzelne Nachricht Informationen bezüglich der Adresse der Anzeigevorrichtung, deren Beleuchtungsfarbe verändert werden soll, und Informationen bezüglich der Einstellung der Beleuchtungsfarbe der Anzeigevorrichtung (2) enthält, deren Beleuchtungsfarbe verändert werden soll.

19. Fahrzeug, **dadurch gekennzeichnet, dass** ein Steuersystem (1) nach einem der Ansprüche 1-18 aufweist.

20. Fahrzeug nach Anspruch 19, **dadurch gekennzeichnet, dass** es sich um ein Kraftfahrzeug handelt.

## Revendications

1. Système de commande (1) pour au moins un dispositif d'affichage (2) d'informations concernant un véhicule, ledit dispositif d'affichage (2) étant d'un type qui peut être modifié concernant au moins une couleur d'éclairage, ledit système de commande comprenant une interface utilisateur (3) pour permettre à un utilisateur d'interagir avec ledit dispositif d'affichage (2), et des moyens de commande électroniques (4) connectés audit dispositif d'affichage (2), à ladite interface utilisateur (3) et à des moyens capteurs pour au moins une quantité concernant l'environnement et/ou le moteur et/ou la sécurité de conduite dudit véhicule, et pour commander ladite couleur d'éclairage en réponse aux actions de l'utilisateur sur ladite interface utilisateur (3), lesdits moyens de commande électronique (4) étant configurés pour implémenter un premier mode de personnalisation desdites couleurs d'éclairage, qui peut être sélectionné par l'utilisateur via ladite interface utilisateur (3), dans lequel lesdites couleurs d'éclairage sont créées par l'utilisateur en fonction d'une gamme de couleurs fondamentales (R, V, B) ; **caractérisé en ce que** lesdits moyens de commande électronique (4) sont configurés pour stocker au moins un premier (TAB_{COL}), un deuxième (TAB_{COL_DEV}) et un troisième (TAB_{CHANGE_COL}) tableaux prédéfinis,
■ ledit premier tableau (TAB_{COL}) comprenant des données représentatives d'au moins une gamme de couleurs d'éclairage prédéfinies,
■ ledit deuxième tableau (TAB_{COL_DEV}) comprenant des données représentatives dudit dispositif d'affichage (2) et des données représentatives d'au moins une couleur d'éclairage qui lui est associée, et
■ ledit troisième tableau (TAB_{CHANGE_COL}) comprenant :
■ des données représentatives dudit dispositif d'affichage (2),
■ au moins une première couleur d'éclairage associée audit dispositif d'affichage (2) et à un premier mode de fonctionnement dudit dispositif d'affichage (2),
■ au moins une deuxième couleur d'éclairage associée audit dispositif d'affichage (2) et à un deuxième mode de fonctionnement dudit dispositif d'affichage (2),
■ plusieurs premières valeurs seuil pour lesdites quantités concernant l'environnement et/ou le moteur et/ou la sécurité de conduite dudit véhicule,
■ lesdits premier/deuxième modes de fonctionnement étant actionnables en fonction de la valeur desdites quantités concernant le moteur selon les conditions de conduite dudit véhicule et/ou le moteur dudit véhicule, desdites quantités concernant l'environnement ou desdites quantités associées à la sécurité du véhicule, par rapport auxdites valeurs seuil ;
lesdits moyens de commande électroniques (4) étant également configurés pour implémenter un deuxième mode de personnalisation qui peut être sélectionné par un utilisateur via lesdits moyens d'interface utilisateur (3), où, dans ledit deuxième mode (MAN/TAB), l'utilisateur peut sélectionner l'un desdits deuxième (TAB_{COL_DEV}) et troisième (TAB_{CHANGE_COL}) tableaux via lesdits moyens d'interface utilisateur (3) et ladite couleur d'éclairage dudit dispositif d'affichage (2) étant réglée et commandée automatiquement en fonction des données contenues dans ledit tableau sélectionné ;
dans lequel, lesdits moyens de commande électroniques (4) étant configurés pour, lorsque ledit deuxième mode de personnalisation est implémenté, comparer lesdites premières valeurs seuil desdites quantités associées au moteur, à l'environnement et à la sécurité du véhicule, stockées dans ledit troisième tableau (TAB_{CHANGE_COL}) ou réglées par ledit utilisateur, aux deuxièmes valeurs seuil desdites quantités associées au moteur, à l'environnement et à la sécurité du véhicule provenant de sources d'informations distantes.

2. Système de commande selon la revendication 1, dans lequel lesdits moyens de commande électroniques (4) sont également configurés pour implémenter un mode de configuration (CONFIG) qui peut être sélectionné par un utilisateur via lesdits moyens d'interface utilisateur (3), l'utilisateur pouvant modifier manuellement au moins une partie des données contenues dans lesdits premier (TAB_{COL}), deuxième (TAB_{COL_DEV}) et troisième (TAB_{CHANGE_COL}) tableaux dans ledit mode de configuration (CONFIG) via ladite interface utilisateur (3).

3. Système de commande pour plusieurs dispositifs d'affichage (2) selon la revendication 1 ou 2, dans lequel lesdits moyens de commande électroniques (4) sont également configurés pour implémenter un troisième mode de personnalisation (TAB) qui peut être sélectionné par un utilisateur via lesdits moyens d'interface utilisateur (3), où, dans ledit troisième mode de personnalisation, ledit utilisateur pouvant :
■ sélectionner, via ladite interface utilisateur (3), au moins un dispositif d'affichage (2) pour lequel il est souhaité régler ou modifier la couleur d'éclairage qui lui est associée,
■ sélectionner une couleur d'éclairage,
■ associer la couleur d'éclairage sélectionnée au dispositif sélectionné.

4. Système de commande selon la revendication 1, dans lequel lesdits moyens de commande électroniques (4) sont configurés pour sélectionner l'une desdites premières valeurs seuil pour lesdites quantités réglées par l'utilisateur et desdites deuxièmes valeurs seuil fournies par lesdites sources d'informations distantes en fonction de ladite comparaison et d'une logique qui garantit l'observation d'au moins une priorité prédéfinie.

5. Système de commande selon la revendication 4, dans lequel lesdits moyens de commande électroniques (4) sont configurés pour sélectionner uniquement l'une desdites premières valeurs seuil desdites quantités réglées par l'utilisateur.

6. Système de commande selon la revendication 5, dans lequel lesdits moyens de commande électroniques (4) sont configurés pour modifier au moins l'une desdites valeurs seuil en fonction des conditions de conduite instantanées dudit véhicule et/ou du moteur dudit véhicule.

7. Système de commande selon la revendication 1, dans lequel lesdits moyens de commande électroniques (4) sont également configurés pour implémenter un quatrième mode de personnalisation (AUTO/TAB_{COL_DEV}) que l'utilisateur peut sélectionner via lesdits moyens d'interface utilisateur (3), dans ledit quatrième mode (AUTO/TAB_{COL_DEV}), lesdits moyens de commande électroniques (4) étant configurés pour sélectionner automatiquement l'un de plusieurs deuxièmes tableaux (TAB_{COL_DEV}) disponibles pour le réglage de ladite couleur d'éclairage dudit dispositif d'affichage en fonction des données contenues dans ledit deuxième tableau (TAB_{COL_DEV}) sélectionné automatiquement.

8. Système de commande selon la revendication 6, dans lequel lesdits moyens de commande électroniques (4) sont également configurés pour implémenter un cinquième mode de personnalisation (AUTO/TAB_{CHANGE_COL}) que l'utilisateur peut sélectionner via lesdits moyens d'interface utilisateur (3), dans ledit cinquième mode (AUTO/TAB_{CHANGE_COL}) , lesdits moyens de commande électroniques (4) étant configurés pour sélectionner automatiquement l'un des plusieurs troisièmes tableaux (TAB_{CHANGE_COL}) disponibles et régler et modifier ladite couleur d'éclairage dudit dispositif d'affichage (2) en fonction dudit troisième tableau (TAB_{COL_DEV}) sélectionné automatiquement.

9. Système de commande selon la revendication 2, dans lequel lesdits moyens de commande électroniques (4) sont également configurés pour implémenter un sixième mode de personnalisation (AUTO/LUM) que l'utilisateur peut sélectionner via lesdits moyens d'interface utilisateur (3), dans ledit sixième mode (AUTO/LUM), lesdits moyens de commande électroniques (4) étant configurés pour sélectionner automatiquement l'un des plusieurs deuxièmes tableaux (TAB_{CHANGE_COL}) disponibles, régler ladite couleur d'éclairage dudit dispositif d'affichage (2) en fonction dudit deuxième tableau (TAB_{COL_DEV}) sélectionné et modifier ladite couleur d'éclairage dudit dispositif d'affichage (2) exclusivement en fonction de ladite luminosité externe et/ou interne dudit véhicule.

10. Système de commande selon l'une quelconque des revendications précédentes, dans lequel lesdits moyens de commande électroniques (4) sont également configurés pour commander une variation chromatique progressive desdites couleurs d'éclairage desdits dispositifs d'affichage (2) en fonction d'une valeur prise par lesdites quantités concernant le moteur, selon les conditions de conduite dudit véhicule et/ou le moteur dudit véhicule, desdites quantités concernant l'environnement ou desdites quantités associées à la sécurité du véhicule, par rapport auxdites valeurs seuil desdites quantités.

11. Système de commande selon l'une quelconque des revendications précédentes, dans lequel ladite interface utilisateur (3) comprend au moins l'un des dispositifs suivants : une carte à puce, une clé d'allumage électronique dudit véhicule ayant une mémoire, un menu à fenêtres, un dispositif électronique à commande vocale, et un clavier.

12. Système de commande (1) selon l'une quelconque des revendications précédentes, dans lequel lesdites quantités concernant l'environnement comprennent au moins l'une des quantités suivantes : la température extérieure, la température intérieure du compartiment/de la cabine conducteur et passager dudit véhicule, et la luminosité externe.

13. Système de commande (1) selon l'une quelconque des revendications précédentes, dans lequel lesdites quantités concernant le moteur comprennent au moins l'une des quantités suivantes :
■ la vitesse sur route dudit véhicule,
■ le régime moteur dudit véhicule,
■ la température de l'huile de lubrification dudit moteur,
■ le niveau de carburant, et
■ la température du liquide de refroidissement dudit moteur.

14. Système de commande (1) selon l'une quelconque des revendications précédentes, dans lequel lesdites quantités associées à la sécurité dudit véhicule comprennent au moins l'une des quantités suivantes :
■ l'adhérence dudit véhicule sur la surface de la route,
■ le niveau de stabilité dudit véhicule,
■ la distance à un véhicule et/ou un obstacle qui suit et/ou précède ledit véhicule.

15. Système de commande selon l'une quelconque des revendications précédentes, dans lequel ledit dispositif d'affichage d'informations (2) comprend au moins l'un des dispositifs suivants :
■ le tableau de bord dudit véhicule,
■ l'écran d'affichage d'un autoradio,
■ l'écran d'affichage d'un navigateur,
■ l'écran d'affichage d'un climatiseur d'air.

16. Système de commande (1) pour plusieurs dispositifs d'affichage selon l'une quelconque des revendications précédentes, dans lequel lesdits moyens de commande électroniques (4) sont configurés pour générer et envoyer un unique premier message codé de type diffusion à tous lesdits dispositifs d'affichage (2), au cas où tous lesdits dispositifs d'affichage (2) doivent prendre la même couleur d'éclairage, ledit premier message codé de type diffusion ne contenant que des informations concernant le réglage de ladite couleur d'éclairage.

17. Système de commande (1) pour plusieurs dispositifs d'affichage selon l'une quelconque des revendications précédentes, dans lequel lesdits moyens de commande électroniques (4) sont configurés pour générer et envoyer un unique deuxième message de type diffusion aux dispositifs d'affichage (2) pour lesquels il est souhaité de changer ladite couleur d'éclairage, ledit deuxième message codé de type diffusion contenant des informations concernant l'adresse de chacun desdits dispositifs d'affichage pour lesquels il est souhaité de changer ladite couleur d'éclairage et des informations concernant le réglage de la couleur d'éclairage (2) de chacun desdits dispositifs d'affichage pour lesquels il est souhaité de changer ladite couleur d'éclairage.

18. Système de commande (1) pour plusieurs dispositifs d'affichage selon l'une quelconque des revendications précédentes, dans lequel lesdits moyens de commande électroniques (4) sont configurés pour générer et envoyer un unique message à un dispositif d'affichage (2) pour lequel il est souhaité de changer une couleur d'éclairage, ledit unique message contenant des informations concernant l'adresse dudit dispositif d'affichage pour lequel il est souhaité de changer ladite couleur d'éclairage et des informations concernant le réglage de la couleur d'éclairage (2) dudit dispositif d'affichage.

19. Véhicule, **caractérisé en ce qu'**il comprend un système de commande (1) selon l'une quelconque des revendications 1 à 18.

20. Véhicule selon la revendication 19, **caractérisé en ce qu'**il est un véhicule à moteur.
